# EUROPÄISCHE PATENTSCHRIFT

(11) **EP 3 510 455 B1**
(45) Veröffentlichungstag und Bekanntmachung des Hinweises auf die Patenterteilung: **03.11.2021**
(21) Anmeldenummer: 17768070.9
(22) Anmeldetag: 11.09.2017
(51) Int. Cl.: G05B 19/4065

(54) **VERFAHREN ZUM ÜBERWACHEN VON ZUMINDEST EINER WERKZEUGMASCHINE UND FERTIGUNGSANLAGE**
METHOD FOR MONITORING AT LEAST ONE MACHINE TOOL AND PRODUCTION SYSTEM
PROCÉDÉ DE SURVEILLANCE D'AU MOINS UNE MACHINE-OUTIL ET INSTALLATION DE PRODUCTION

(30) Priorität: 12.09.2016 DE 102016117101
(43) Veröffentlichungstag der Anmeldung: 17.07.2019
(73) Patentinhaber: KOMET Deutschland GmbH, 74354 Besigheim (DE)
(72) Erfinder: BRINKHAUS, Jan-Wilm, 30916 Isernhagen (DE)
(74) Vertreter: Gramm, Lins & Partner Patent- und Rechtsanwälte PartGmbB
(86) Internationale Anmeldenummer: PCT/EP2017/072743
(87) Internationale Veröffentlichungsnummer: WO 2018/046727

(56) Entgegenhaltungen:
- DE-A1-102009 024 101
- DE-B3-102015 001 557
- DE-T5-112004 000 242

## Beschreibung

Die Erfindung betrifft ein Verfahren zum Überwachen von zumindest einer Werkzeugmaschine. Gemäß einem zweiten Aspekt betrifft die Erfindung eine Fertigungsanlage.

Es ist bekannt, Werkzeugmaschinen zu überwachen. Die Überwachung kann dazu dienen, die Fertigungszeit zu minimieren. Dazu kann eine Maschinensteuerung oder eine davon unabhängige Werkzeugmaschinen-Überwachungsvorrichtung so programmiert sein, dass sie anhand von aufgenommenen Messdaten stets die optimale Abarbeitungsgeschwindigkeit eines Fertigungsprogramms einstellt. Es ist zudem bekannt, Werkzeugmaschinen auf einen etwaigen Werkzeugbruch oder eine Überlastung der Werkzeugmaschine, beispielsweise durch ein fehlerhaft eingewechseltes Werkzeug, zu überwachen.

Derartige Überwachungsprozesse werden in Echtzeit durchgeführt, um rechtzeitig eingreifen zu können. Das heißt, dass die Werkzeugmaschinen-Überwachungsvorrichtung so mit Sensoren oder der Maschinensteuerung der Werkzeugmaschine kommuniziert, dass eine vorgegebene maximale Reaktionszeit bei der Kommunikation nicht überschritten wird.

Nachteilig an bekannten Werkzeugmaschinen-Überwachungsvorrichtungen ist der beträchtliche Aufwand bei der Wartung und Installation.

Die DE 10 2009 024 101 A1 beschreibt ein Überwachungssystem für eine Werkzeugmaschine, bei dem in Echtzeit ermittelte Daten in einem Aktionsspeicher gespeichert werden. Auf diesen Aktionsspeicher greift eine Datenverarbeitungsanlage zu, die anhand der Daten den Zustand der Werkzeugmaschine ermittelt. Auf diese Weise können Unfälle erkannt und deren Auswirkungen durch frühzeitige Wartung begrenzt werden. Nachteilig an einem solchen System ist, dass die Produktivität der Werkzeugmaschine nur mittelbar gesteigert werden kann.

Die D2 DE 10 2007 048 961 A1 offenbart ein Verfahren zum Bearbeiten eines Werkstücks, bei dem am Bearbeitungskopf Kräfte aufgenommen und echtzeitnah analysiert werden. Die Analyseergebnisse werden verwendet, um die Regelung des Bearbeitungsprozesses anzupassen. Ein solches System ist in der Einleitung der Patentanmeldung schon beschrieben und setzt beträchtliche Rechnerkapazität direkt an der Werkzeugmaschine voraus.

In der DE 101 52 765 A1 ist beschrieben, dass eine Werkzeugmaschine in Echtzeit erfasste Daten an einen Zentralrechner schickt, der diese Daten auswertet und maschinenbezogene Daten oder Dienste erzeugt. Beispielsweise werden Grenzwerte von Prozessvariablen überwacht und bewertet. So können die Daten eines Kreisformtests verwendet werden, um die Bearbeitungsgenauigkeit der Werkzeugmaschine auf dem Zentralrechner zu bestimmen. Gegebenenfalls wird der Prozess abgebrochen.

Die EP 2 793 088 A1 lehrt, Prozessparameter einer Werkzeugmaschine zu messen und eine Differenz zu einem Soll-Signal zu speichern. Diese Differenz kann in einem externen Rechner ausgewertet werden. Das ermöglicht eine Fernwartung der Werkzeugmaschine.

Der Erfindung liegt die Aufgabe zugrunde, Nachteile im Stand der Technik zu vermindern.

Die Erfindung löst das Problem durch ein Verfahren mit den Merkmalen von Anspruch 1.

Gemäß einem zweiten Aspekt löst die Erfindung das Problem durch eine Fertigungsanlage mit (i) einer ersten Werkzeugmaschine, die eine erste echtzeitfähige Maschinensteuerung aufweist, (ii) zumindest einer zweiten Werkzeugmaschine, die eine zweite echtzeitfähige Maschinensteuerung aufweist, und (iii) einer Auswerteeinheit, (iv) einem nicht echtzeitfähigen Datenbus, der die erste Werkzeugmaschine und die zumindest eine zweite Werkzeugmaschine mit der Auswerteeinheit verbindet, wobei (v) die Werkzeugmaschinen eingerichtet sind zum automatischen (a) Erfassen von zeitabhängigen Messdaten, die einen auf der jeweiligen Werkzeugmaschine ablaufenden Fertigungsprozess charakterisieren, (b) Versehen der Messdaten mit einem Zeitstempel, der einen Zeitpunkt kodiert, zu dem ein jeweiliges Messdatum erfasst wurde, sodass Messergebnisse erhalten werden, und (c) Senden der Messergebnisse über den Datenbus an die Auswerteeinheit, wobei (vi) die Auswerteeinheit eingerichtet ist zum automatischen (a) Berechnen zumindest eines Befehls für die Werkzeugmaschinen aus den jeweiligen Messergebnissen und (b) Senden des zumindest einen Befehls über den Datenbus an die Werkzeugmaschinen und wobei (vii) die Werkzeugmaschinen eingerichtet sind zum automatischen (a) Empfangen des zumindest einen Befehls von der Auswerteeinheit, und (b) Überwachen des Fertigungsprozesses mittels eines Programms, das den Befehl enthält. Vorzugsweise sind die Werkzeugmaschinen eingerichtet zum automatischen (c) Ermitteln einer Reaktionszeit des Datenbusses und (d) wenn die Reaktionszeit einen vorgegebenen Reaktionszeit-Schwellenwert überschreitet, Begrenzen eines Abarbeitungsgeschwindigkeitswerts auf einen Maximal- Abarbeitungsgeschwindigkeitswert.

Vorteilhaft an der Erfindung ist, dass die Hardware-Anforderung an die Werkzeugmaschine kleiner ist. Da die Auswertung dezentral erfolgt, müssen die Werkzeugmaschinen lediglich dazu in der Lage sein, die Messdaten zu erfassen, mit dem Zeitstempel zu versehen und das Überwachungsprogramm auszuführen.

Besonders vorteilhaft ist, dass eine Veränderung des zur Auswertung verwendeten Programms nur an einem Rechner vorgenommen werden muss, nämlich in der Auswerteeinheit. Muss beispielsweise die Fertigungsgeschwindigkeit erhöht werden, so ist dies einfach dadurch möglich, dass das entsprechende Überwachungsprogramm so geändert wird, dass zentral die Abarbeitungsgeschwindigkeit aller Fertigungsprogramme erhöht wird. Dies erhöht zwar den Verschleiß der Werkzeuge, dieser Aspekt kann aber in den Hintergrund treten. Ist im umgekehrten Fall die Auslastung der Fabrikanlage niedrig, so kann die Fertigungsgeschwindigkeit für alle oder mehrere Werkzeugmaschinen schnell herabgesetzt werden, um den Verschleiß der Werkzeuge zu verringern und somit Fertigungskosten einzusparen.

Günstig ist es, dass die Überwachung von zwei oder mehr Werkzeugmaschinen möglich ist, ohne dass ein echtzeitfähiges Bussystem vorhanden sein muss. Der Erfindung liegt die Erkenntnis zugrunde, dass es zwar wünschenswert, nicht aber notwendig ist, die Messdaten in Echtzeit zu verarbeiten, solange sichergestellt ist, dass das der Werkzeugmaschinen-Überwachungsvorrichtung laufende Programm so ausgebildet ist, dass die Werkzeugmaschinen-Überwachungsvorrichtung beim Ausbleiben von in Echtzeit generierten Befehlen nicht oder nur so in das vorgegebene Programm eingreift, dass Fertigungsfehler weitgehend ausgeschlossen sind. Auch bei nicht echtzeitfähigen Datenbussen kann nämlich davon ausgegangen werden, dass eine maximale Verzögerungszeit zwischen dem Zeitpunkt, zu dem ein Befehl über einen Echtzeit-Datenbus eintreffen würde, und dem Zeitpunkt, zu dem der Befehl über den nicht echtzeitfähigen Datenbus tatsächlich eintrifft, hinreichend kurz ist, um eine Gefährdung der Werkzeugmaschine weitgehend ausschließen zu können.

Im Rahmen der vorliegenden Beschreibung wird unter einer echtzeitfähigen Vorrichtung eine solche Vorrichtung verstanden, die so aufgebaut ist, dass vorgegebene Ergebnisse sicher innerhalb einer vorbestimmten Zeitspanne, nämlich der Reaktionszeit, erhalten werden. Insbesondere ist die Maschinensteuerung ausgebildet zum Überwachen der Werkzeugmaschine in Echtzeit gemäß DIN 44300. Insbesondere beträgt eine Reaktionszeit höchstens einen Interpolatortakt, höchstens einen Lagereglertakt und/oder höchstens einen SPS-Takt der betreffenden Werkzeugmaschine. Vorzugsweise beträgt eine Reaktionszeit höchstens 50 Millisekunden, insbesondere höchstens 10 Millisekunden.

Unter einer Werkzeugmaschine wird insbesondere eine spanende oder umformende Werkzeugmaschine verstanden.

Unter dem Versehen der Messdaten mit einem Zeitstempel wird insbesondere verstanden, dass dem Messdatum oder der Gruppe von Messdaten die Zeit zugeordnet wird, zu der das Messdatum oder die Messdaten entweder aufgenommen wurden oder zu dem die Maschine in dem Zustand war, der durch das Messdatum beschrieben wurde. Es ist möglich, dass es sich bei den Messdaten um reduzierte Daten handelt, beispielsweise um einen gleitenden Mittelwert über einen vorgegebenen gleitenden Mittelungszeitraum, der beispielsweise höchstens 10 Millisekunden lang ist. Bei der Zeit kann es sich um die reale Zeit handeln. Alternativ ist es aber auch möglich, dass die angegebene Zeit eine Maschinenzeit ist.

Unter dem Merkmal, dass die Messergebnisse über einen nicht echtzeitfähigen Datenbus übertragen werden, wird insbesondere verstanden, dass zu dem Zeitpunkt, zu dem die Messergebnisse übertragen werden, der Datenbus nicht im Echtzeit-Modus arbeitet. So ist es theoretisch denkbar, dass der Datenbus grundsätzlich echtzeitfähig betreibbar ist, die Messergebnisse aber nicht echtzeitfähig und/oder nicht in Echtzeit übertragen werden. Es kann in anderen Worten nicht garantiert werden, dass eine vorgegebene Reaktionszeit, wie sie oben angegeben ist, eingehalten wird. Insbesondere ist der Datenbus aber konstruktionsbedingt nicht echtzeitfähig. Vorzugsweise ist der Datenbus so aufgebaut, dass konstruktionsbedingt eine Reaktionszeit, die kleiner ist als höchstens 100 ms, nicht garantiert ist.

Unter einem Befehl wird insbesondere eine Handlungsanweisung an die Werkzeugmaschine bzw. die Maschinensteuerung verstanden. Dieser Befehl ist eine Anweisung dahingehend, wie die Werkzeugmaschine überwacht wird. Wie dieser Befehl kodiert ist, ist unbeachtlich.

Es ist möglich, nicht aber notwendig, dass der Befehl durch einen Parameter oder einen Parametersatz gebildet ist, der zusammen mit einem in der Maschinensteuerung und/oder einer etwaig vorhandenen Werkzeugmaschinen-Überwachungsvorrichtung vorgehaltenen vorgefertigten Roh-Befehl von der Werkzeugmaschinen-Überwachungsvorrichtung zu einem kompletten Befehl ergänzt wird. Beispielsweise kann es sich bei einem solchen Parameter um die eines P-, PI- oder PID-Reglers und/oder um einen Schwellenwert handeln, bei dessen Überschreiten der Override-Wert der Werkzeugmaschine reduziert wird. Der Override-Wert, der auch als Abarbeitungsgeschwindigkeitswert bezeichnet werden könnte, gibt an, mit welcher Geschwindigkeit ein Fertigungsprogramm abgearbeitet werden soll. In der Regel wird der Override-Wert in Prozenten einer Grund-Abarbeitungsgeschwindigkeit angegeben, die 100 % entspricht.

Das Erfassen der Messdaten kann ein Auslesen der Maschinensteuerung umfassen. Alternativ oder zusätzlich kann das Erfassen der Messdaten ein Abgreifen von Sen-sordaten zumindest eines Sensors umfassen, der nicht mit der Maschinensteuerung verbunden ist. Bei diesem Sensor kann es sich beispielsweise um einen Beschleunigungssensor handeln, der beispielsweise an einem Werkzeug der Werkzeugmaschine oder einer Werkzeugaufnahmevorrichtung der Werkzeugmaschine angeordnet ist und die Beschleunigung, insbesondere die Linearbeschleunigung, des Werkzeugs misst.

Gemäß einer bevorzugten Ausführungsform erfolgt das Erfassen der zeitabhängigen Messdaten und das Versehen der Messdaten mit einem Zeitstempel mittels einer Maschinensteuerung, insbesondere einer NC-Steuerung oder einer PLC-Steuerung. Die Maschinensteuerung steuert und/oder regelt die Positionierung des Werkzeugs. Vorzugsweise laufen auf der Maschinensteuerung zumindest ein Fertigungsprogramm, das die Anweisungen enthält, anhand derer die Bestandteile der Werkzeugmaschine bewegt werden, um das Werkstück zu fertigen, sowie ein Überwachungsprogramm. Das Überwachungsprogramm enthält Befehle zum Überwachen des Fertigungsprozesses. Ein Beispiel findet sich in der DE 10 2009 025 167. Das Überwachungsprogramm und das Fertigungsprogramm laufen simultan, vorzugsweise auf dem gleichen Prozessor.

Die Messergebnisse werden vorzugsweise von einer Werkzeugmaschinen-Überwachungsvorrichtung, insbesondere einem Bedienfeldrechner oder zentralen Server, an die Auswerteeinheit übertragen. Eine Werkzeugmaschinen-Überwachungsvorrichtung ist eine von der Maschinensteuerung unabhängige Rechenvorrichtung, die mit der Maschinensteuerung zum Kommunizieren verbunden ist. Ein Bedienfeldrechner ist ein Rechner, mittels dem eine graphische Benutzerschnittstelle auf einem Bildschirm erstellt wird. Bedienfeldrechner sind auf den meisten Werkzeugmaschinen vorhanden.

Vorzugsweise ist der Befehl ein Bedingungs-Befehl, also ein Befehl, der eine auszuführende Handlung von einer Bedingung abhängig macht. Beispielsweise handelt es sich bei dem Befehl um einen Parametersatz aus zumindest zwei Parametern, wobei ein Parameter einen Schwellenwert angibt, bei dessen Über- oder Unterschreiten der Override-Wert gesenkt bzw. erhöht werden soll. Der andere Paramater gibt an, wie stark der Override-Wert in Abhängigkeit von einer Abweichung vom Schwellenwert geändert werden soll. Beispielsweise gibt der erste Parameter ein Soll-Motor-Drehmoment M_{Soll} oder einen diesen beschreibenden Wert, beispielsweise einen Ankerstrom des Motors, an. Wird dieses Motor-Solldrehmoment um x-% überschritten, so wird der Override-Wert um a·x %-Punkte vermindert, insbesondere auf 100 % - ax%.

Die Parameter M_{Soll} und der Verstärkungsfaktor a bilden in diesem Fall einen Parametersatz, der den Befehl darstellt. Die Maschinensteuerung oder die etwaig vorhandene Werkzeugmaschinen-Überwachungsvorrichtung fügt diese Parameter in den Roh-Befehl ein, der angibt, dass kontinuierlich das Ist-Motordrehmoment Mₗₛₜ erfasst wird, mit dem Soll-Motordrehmoment M_{Soll} verglichen wird und dass eine Abweichung des Ist-Motordrehmoments nach oben zu einer Reduktion des Override-Werts führt, wie er oben angegeben ist.

Der Befehl kodiert dann, wann oder wie stark der Abarbeitungsgeschwindigkeitswert zu ändern ist, wobei der Abarbeitungsgeschwindigkeitswert eine Geschwindigkeit kodiert, mit der ein Fertigungsprogramm auf der Werkzeugmaschine abgearbeitet wird.

Vorzugsweise umfasst das Überwachen des Fertigungsprozesses ein Überwachen auf Werkzeugbruch und/oder Werkzeugverschleiß.

Das Verfahren umfasst die Schritte eines Ermittelns einer Reaktionszeit des Datenbusses, insbesondere mittels der Werkzeugmaschinen-Überwachungsvorrichtung und eines Begrenzen des Abarbeitungsgeschwindigkeitswerts auf einen Maximal-Abarbeitungsgeschwindigkeitswert, wenn die Reaktionszeit einen vorgegebenen Reaktionszeit-Schwellenwert überschreitet. Andernfalls wird der Abarbeitungsgeschwindigkeitswert nicht begrenzt. Die Reaktionszeit wird beispielsweise dadurch ermittelt, dass die Werkzeugmaschinen-Überwachungsvorrichtung eine Antwortbitte (ping-Befehl) an die Auswerteeinheit übersendet, die diese schnellstmöglich beantwortet. Die Reaktionszeit ist dann die Hälfte der Zeit, die zwischen dem Senden der Antwortbitte und dem Empfang der Antwort vergeht.

Gemäß einer bevorzugten Ausführungsform wird das Programm, das den übertragenen Befehl enthält, zum Überwachen desjenigen Fertigungsprozesses verwendet, während dem die Messdaten erfasst wurden, aus denen der Befehl berechnet wurde. In anderen Worten erfolgt eine Rückkopplung zwischen den erfassten Messdaten und dem daraus berechneten zumindest einen Befehl kurzfristig, also während des Fertigungsprozesses. Eine derartig kurzfristige Rückmeldung wurde bislang nur mit Echtzeitsystemen realisiert, weil nur damit sichergestellt ist, dass Befehle nicht zu spät empfangen werden. Der Erfindung liegt die Erkenntnis zugrunde, dass eine solche Verspätung tolerabel sein kann, insbesondere wenn sichergestellt ist, dass eine Verspätung als negative Folgen nur haben kann, dass die Produktivität nicht so hoch ist, wie sie ohne Verspätung sein könnte.

Um eine kurze Reaktionszeit zu erreichen, beträgt eine Verarbeitungszeit zwischen dem Erfassen eines Messdatums und dem Empfangen des über den Datenbus übertragenen Befehls, der unter Verwendung des Messdatums berechnet wurde, höchstens 60 Sekunden, insbesondere höchstens 10 Sekunden. Selbstverständlich wird diese Zeit überschritten, wenn es zu einem Ausfall des Datenbusses kommt, maßgeblich ist aber, dass die Verarbeitungszeit im störungsfreien Betrieb beispielsweise in zumindest 95% der Fälle eingehalten wird. Vorzugsweise beträgt eine Antwortzeit zwischen dem Übertragen der Messergebnisse an die Auswerteeinheit und einem Empfangen des über den Datenbus übertragenen Befehls höchstens 30 Sekunden, insbesondere höchstens 10 Sekunden.

Vorzugsweise beträgt eine Antwortzeit zwischen dem Übertragen der Messergebnisse an die Auswerteeinheit und einem Empfangen des über den Datenbus übertragenen Befehls höchstens 1 Sekunde. In anderen Worten erfolgt die Übertragung schnell, wenngleich nicht zwingend in Echtzeit.

Der Befehl ist vorzugsweise ein Bedingungs-Befehl und kodiert, dass eine Abarbeitungsgeschwindigkeit verringert wird, insbesondere auf null (sodass der Fertigungsprozess stoppt), wenn ein Prozessparameter, der eine Prozesskraft beschreibt, einen im Befehl kodierten Prozessparameter-Maximalwert überschreitet. Liegt beispielsweise an einer Maschinenachse, von der die Werkzeugmaschine vorzugsweise zumindest zwei aufweist, eine Kraft, die einen Prozessparameter darstellt, an, die größer ist als der Prozessparameter-Maximalwert, so wird die Abarbeitungsgeschwindigkeit reduziert, bis der Prozessparameter-Maximalwert nicht mehr überschritten wird.

Bevorzugt ist der Befehl ein Bedingungs-Befehl und kodiert, dass der Fertigungsprozess stoppt, wenn ein Spindelparameter, der ein Spindeldrehmoment einer Spindel der Werkzeugmaschine beschreibt, einen im Befehl kodierten Maximalwert überschreitet. Das Überwachen des Fertigungsprozesses umfasst vorzugsweise die Schritte eines Auslesens der Messdaten aus einer Maschinensteuerung der Werkzeugmaschine. Überschreitet der Spindelparameter den Maximalwert, wird ein Befehl an die Maschinensteuerung ausgegeben, dass eine Abarbeitungsgeschwindigkeit des Fertigungsprogramms gesenkt wird, bis der Maximalwert nicht mehr überschritten wird. Die Auswerteeinheit und die Maschinensteuerung sind damit Teile einer Regelschleife zum Regeln des Spindelparameters auf einen Wert unterhalb des Maximalwerts.

Das Senken der Abarbeitungsgeschwindigkeit kann auch ein Anhalten des Fertigungsprogramms und damit ein Stoppen des Fertigungsprozesses sein. So wird eine Überlastung des Werkzeugs verhindert. Das Senken der Abarbeitungsgeschwindigkeit kann insbesondere mit einer Anzeige einer entsprechenden Meldung auf einem Maschinenbedienfeld einhergehen.

Der Spindelparameter kann beispielsweise ein Ankerstrom in der Spindel, eine Leistungsaufnahme der Spindel oder das Spindeldrehmoment selbst sein.

Vorzugsweise ist der Befehl ein Bedingungs-Befehl und kodiert, dass der Fertigungsprozess stoppt, wenn der Spindelparameter einen im Befehl kodierten Minimalwert für eine vorgegebene Zeitspanne unterschreitet. Der Befehl kann die Zeitspanne kodieren oder diese ist fest vorgegeben und beispielsweise in der Werkzeugmaschinen-Überwachungsvorrichtung gespeichert. Wird der Minimalwert für die vorgegebene Zeitspanne unterschritten, ist das ein Anzeichen, dass ein Werkzeug, das zum Fertigen verwendet wurde, gebrochen ist.

Die Fertigungsanlage ist vorzugsweise ausgebildet zum Durchführen eines Verfahrens mit den oben angegebenen Schritten.

Vorzugsweise umfasst das Verfahren ein Visualisieren der Messdaten mittels der Auswerteeinheit.

Im Folgenden wird die Erfindung anhand der beigefügten Zeichnungen näher erläutert. Dabei zeigt
- Figur 1: eine schematische Ansicht einer erfindungsgemäßen Fertigungsanlage zur Durchführung eines erfindungsgemäßen Verfahrens und
- Figur 2: ein Schema für einen Ablauf eines erfindungsgemäßen Verfahrens,
- Figur 3: eine schematische Ansicht einer zweiten Ausführungsform einer erfindungsgemäßen Fertigungsanlage zur Durchführung eines erfindungsgemäßen Verfahrens.

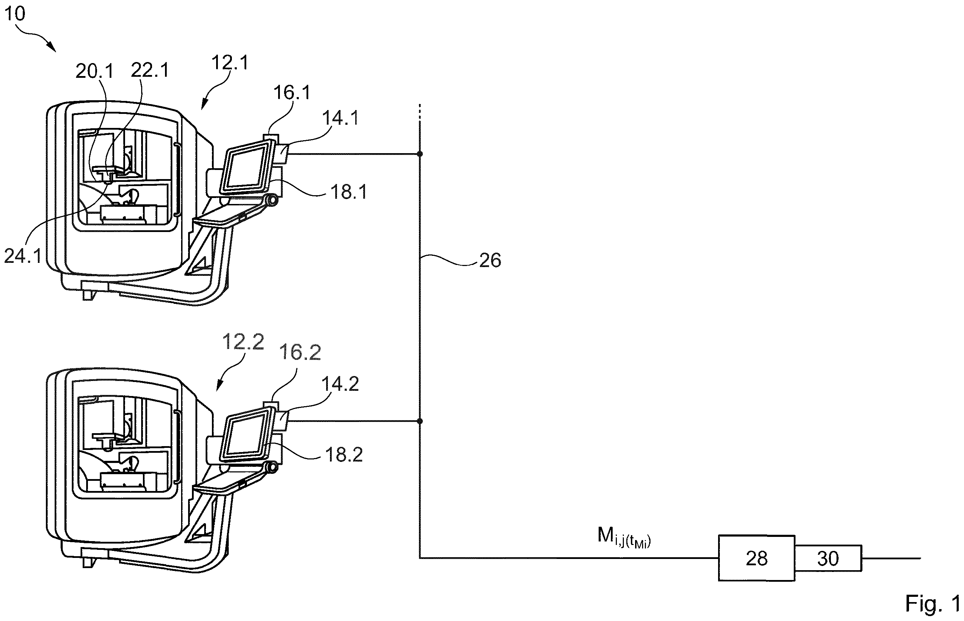

Figur 1 zeigt eine erfindungsgemäße Fertigungsanlage 10 mit einer ersten Werkzeugmaschine 12.1 und zumindest einer zweiten Werkzeugmaschine 12.2 sowie einer ersten Werkzeugmaschinen-Überwachungsvorrichtung 14.1 in Form eines ersten Bedienfeldrechners und einer zweiten Werkzeugmaschinen-Überwachungsvorrichtung 14.2 in Form eines zweiten Bedienfeldrechners. Die beiden Werkzeugmaschinen-Überwachungsvorrichtungen 14 sind über jeweilige Datenverbindungen 16.1, 16.2, beispielsweise mittels Kabeln und/oder Steckverbindungen, mit einer jeweiligen Maschinensteuerung 18.1 bzw. 18.2 verbunden.

Die Maschinensteuerung 18.i (i = 1,...N; N: Zahl der Werkzeugmaschinen der Fertigungsanlage) steuert die jeweilige Werkzeugmaschine 12.i so an, dass sie ein vorgegebenes Fertigungsprogramm ausführt. Die Bedienfeldrechner 14.i sind nicht echtzeitfähig. Auf ihnen läuft insbesondere ein Editor für ein Fertigungsprogramm. Nach Fertigstellen des Fertigungsprogramms wird dieses an die jeweilige Maschinensteuerung 18.1 bzw. 18.2 übertragen und dort in Echtzeit ausgeführt.

Die Maschinensteuerungen 18.i erfassen in regelmäßigen Zeitabständen tⱼ Messdaten und verbinden diese mit einem Zeitstempel, sodass Messergebnisse Mⱼ(tⱼ) (j = 1, 2,...) erhalten werden. Die Werkzeugmaschinen-Überwachungsvorrichtungen 14.i kommunizieren so mit den jeweiligen Maschinensteuerungen 18.i, dass sie die Messergebnisse Mⱼ(tⱼ) (j = 1, 2,...) in regelmäßigen Zeitabständen tⱼ aus der Maschinensteuerung 18.1 auslesen. Bei den Messwerten Mⱼ kann es sich beispielsweise um Leistungen Ls eines oder mehrerer Antriebsmotoren, die von den Motoren aufgebrachten Drehmomente M_{A,j} oder dazu korrelierende Größen wie beispielsweise die Ankerströme Iⱼ handeln.

Vorzugsweise umfasst die erste Werkzeugmaschine 12.1 zumindest einen Sensor 20.1, beispielsweise einen Beschleunigungssensor, der an einer Werkzeugaufnahme 22.1 angeordnet ist. Bei der Werkzeugmaschine 12.1 handelt es sich im vorliegenden exemplarischen Fall um eine Fräsmaschine und an der Werkzeugaufnahme 22.1 ist ein Fräser 24.1 befestigt.

Damit alle Werkzeugmaschinen 12.i die gleiche Maschinenzeit haben, ist es vorteilhaft, wenn die Werkzeugmaschinen-Überwachungsvorrichtungen 14.i in regelmäßigen Zeitabständen eine Netzwerkzeit erfassen, die beispielsweise mittels des Datenbusses 26 übermittelt wird, und die Netzwerkzeit an die Maschinensteuerungen 18.i weitergeben. Es ist aber auch möglich, dass sich die Maschinenzeiten der Werkzeugmaschine 12.i voneinander unterscheiden. Alternativ - wenngleich technisch aufwändiger - besitzt die Werkzeugmaschinen-Überwachungsvorrichtung 14.1 eine Uhr, die die absolute Zeit t_{a,j} misst.

Die Werkzeugmaschinen-Überwachungsvorrichtungen 14.i sind mittels eines Datenbusses 26 mit einer Auswerteeinheit 28 verbunden. Vorzugsweise beträgt ein Abstand zwischen der Auswerteeinheit 28 und den Werkzeugmaschinen 12.i zumindest 10 Meter, insbesondere ist die Auswerteeinheit 28 in einem anderen Schaltschrank als die Steuerung(en) der Werkzeugmaschinen 12.i angeordnet. Es ist möglich und stellt eine bevorzugte Ausführungsform dar, dass die Auswerteeinheit 28 über eine Schnittstelle 30 mit dem Internet verbunden ist. In anderen Worten ist die Auswerteeinheit 28 ausgebildet zum Kommunizieren im HTML- oder XML-Format.

Die Auswerteeinheit 28 erfasst die Messdaten M_{i,j} = M_{i,j}(t_{Mi,j}), die mit den jeweiligen Zeitstempeln t_{Mi,j} versehen sind, nämlich der jeweiligen j-ten Maschinenzeit Mᵢ der i-ten Werkzeugmaschine.

Auf der Auswerteeinheit 28 läuft für jede Werkzeugmaschine 12.i eine eigene Auswertung der Messdaten M_{i,j}, insbesondere läuft ein eigenes Programm, das die Messdaten M_{i,j} auswertet. Insbesondere ist die Auswerteeinheit 28 ausgebildet zum Berechnen von Schwellenwerten Ms oder Sollwerten M_{Soll} für die erfassten Messdaten M. Wird beispielweise ein Antriebs-Drehmoment M_{A} einer Vorschubachse erfasst, so wird ein Schwellenwert Ms in Form eines Schwellen-Antrieb-Drehmoments M_{S,Arm} errechnet. Dieser Schwellenwert Ms wird über den Datenbus 26 an die Werkzeugmaschinen-Überwachungsvorrichtung 14.1 zurückgesendet.

Bei dem Schwellenwert Ms handelt es sich um einen Parameter, der mit einem vorgefertigten Roh-Befehl in der Werkzeugmaschinen-Überwachungsvorrichtung 14.1 oder der Maschinensteuerung 18.1 zu dem Befehl ergänzt wird, dass bei Überschreiten dieses Schwellenwerts M_{S} eine Handlung ausgelöst wird. Beispielsweise wird ein Override-Wert A, der auch als Abarbeitungsgeschwindigkeitswert bezeichnet werde kann, um ax%-Punkte reduziert, wenn der Schwellenwert Ms um x% überschritten wird. Der Parameter a ist ein Verstärkungsfaktor.

Alternativ oder zusätzlich berechnet die Auswerteeinheit 28 einen Soll-Wert, beispielsweise ein Soll-Motor-Drehmoment M_{Soll} und den Verstärkungsfaktor a. Die Werkzeugmaschinen-Überwachungsvorrichtung 14 oder die Maschinensteuerung 18 fügt die beiden Parameter in das Überwachungsprogramm ein und berechnet den Wert für die Abarbeitungsgeschwindigkeit als A = 100 % + a·(M_{S-}Mⱼ(t))/M_{S}.

Die Werkzeugmaschinen-Überwachungsvorrichtung 14 sendet in regelmäßigen Abständen, beispielsweise zumindest einmal pro Sekunde, eine Testnachricht an die Auswerteeinheit 28, auf die hin die Auswerteeinheit 28 eine Kontrollinformation sendet. Die Werkzeugmaschinen-Überwachungsvorrichtung 14.1 ermittelt daraufhin eine Reaktionszeit *τ* und legt die Reaktionszeit *τ* einmal oder mehrfach oberhalb eines vorgegebenen Schwellenwerts *τₛ*, so reduziert die Werkzeugmaschinen-Überwachungsvorrichtung 14 den Abarbeitungsgeschwindigkeitswert A auf einen vorgegebenen Maximal-Abarbeitungsgeschwindigkeitswert Aₘₐₓ, beispielsweise auf 100 %. In anderen Worten ist es dann möglich, dass dieser Abarbeitungsgeschwindigkeitswert A kleiner ist als Aₘₐₓ, er kann Aₘₐₓ aber nicht überschreiten. Dadurch ist sichergestellt, dass die Werkzeugmaschinen-Überwachungsvorrichtung 14.1 die Werkzeugmaschine 12.1 nicht in einen Zustand bringt, der diesen gefährden könnte.

Gemäß einer bevorzugten Ausführungsform ist die Maschinensteuerung 18.i so programmiert, dass das Überschreiten des Schwellenwerts *τₛ* dazu führt, dass das Fertigungsprogramm in einem Sicherheitsmodus betrieben wird. Es kann vorgesehen sein, dass ein Bediener in diesem Sicherheitsmodus den Override-Wert setzen kann und/oder festlegen kann, dass das bisherige Überwachungsprogramm weiter ausgeführt wird. Alternativ oder zusätzlich wird die Werkzeugmaschine stillgesetzt, das heißt, dass die Fertigung unterbrochen wird.

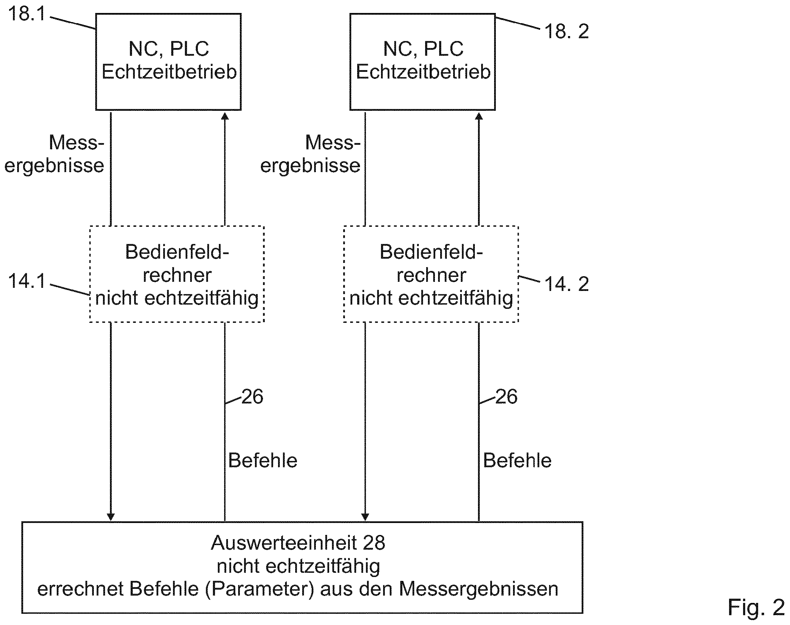

Figur 2 zeigt schematisch, dass die Auswerteeinheit 28 über den nicht echtzeitfähigen oder nicht in Echtzeit betriebenen Datenbus 26 mit der Maschinensteuerung 18.i verbunden ist. Selbstverständlich können alle oder nur ein Teil der Werkzeugmaschinen 12 einer Fertigungsanlage 10 mit der Auswerteeinheit 28 verbunden sein. Die Werkzeugmaschinen-Überwachungsvorrichtungen 14.i sind entbehrlich, wenn die jeweilige Maschinensteuerung 18.i eine Datenbusschnittstelle aufweist. Die Auswerteeinheit 28 ist vorzugsweise räumlich von den Maschinensteuerungen 18.i getrennt.

Der Datenbus 26 kann beispielsweise ein Feldbus nach IEC 61158 oder ein nicht echtzeitfähiger Ethernet-Bus sein.

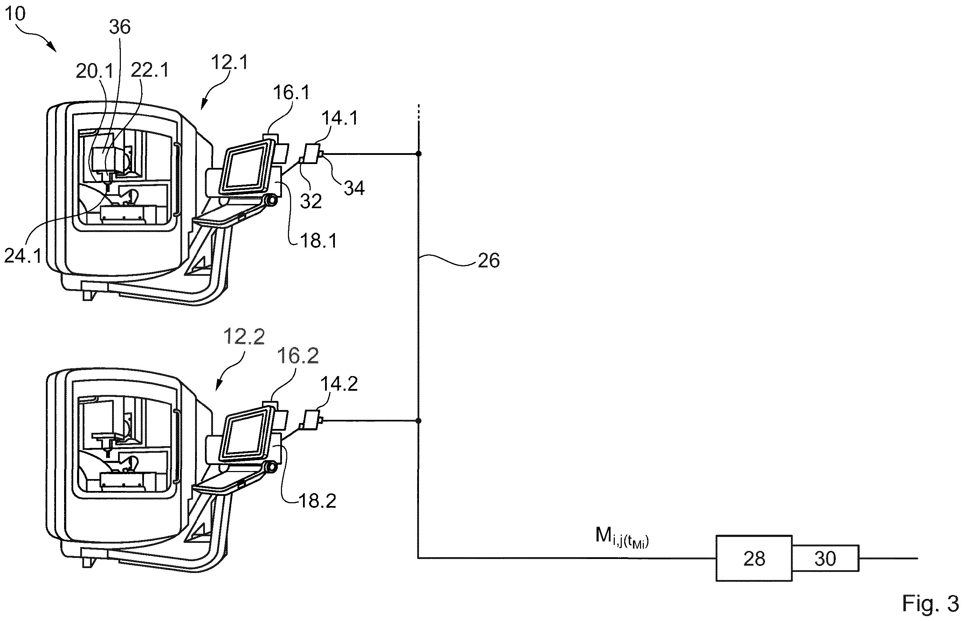

Figur 3 zeigt schematisch eine erfindungsgemäße Werkzeugmaschinen-Überwachungsvorrichtung 14, die vom Bedienfeldrechner getrennt ausgebildet ist und bei der eine erste Schnittstelle 32 mit der Maschinensteuerung 18 verbunden ist. Über die erste Schnittstelle 32 liest die Werkzeugmaschinen-Überwachungsvorrichtung 14 die Messdaten M aus der Maschinensteuerung 18, versieht sie mit einem Zeitstempel und sendet sie kontinuierlich an die Auswerteeinheit 28.

Die Werkzeugmaschinen-Überwachungsvorrichtung 14 besitzt dazu eine zweite Schnittstelle 34, mittels der sie mit der Auswerteeinheit 28 verbunden ist. Auf der Werkzeugmaschinen-Überwachungsvorrichtung 14 läuft ein Überwachungsprogramm, das Befehle an die Maschinensteuerung 18 ausgeben kann. Befehle von der Auswerteeinheit 28 werden in das Überwachungsprogramm eingefügt und ausgeführt. Beispielsweise berechnet die Auswerteeinheit 28 kontinuierlich einen Maximalwert und einen Minimalwert für einen Spindelparameter in Form des Spindeldrehmoments, das an einer Spindel 36 anliegt. Überschreitet der erfasste Messwert M den Maximalwert, so steuert die Werkzeugmaschinen-Überwachungsvorrichtung 14 die Maschinensteuerung so an, dass sie die Abarbeitungsgeschwindigkeit verringert, mit der das Fertigungsprogramm abgearbeitet wird. Dadurch sinkt das Spindeldrehmoment. Das Senken der Abarbeitungsgeschwindigkeit kann auch auf null erfolgen, sodass die Bearbeitung gestoppt wird.

Es ist auch möglich, nicht aber notwendig, dass der Befehl, der von der Auswerteeinheit 28 gesendet wird, eine Maximalkraft kodiert, die an einer der Maschinenachsen der Werkzeugmaschine 12 anliegt. Diese kann beispielsweise anhand des Ankerstroms des Antriebsmotors ermittelt werden.

Da, wie in Figur 3 gezeigt, die Fertigungsanlage 10 zwei oder mehr Werkzeugmaschinen 12 aufweisen kann, aber nur eine Auswerteeinheit 28 benötigt, sinkt der Investitionsaufwand für eine Überwachung der Werkzeugmaschinen.

### Bezugszeichenliste

- 10: Fertigungsanlage
- 12: Werkzeugmaschine
- 14: Werkzeugmaschinen-Überwachungsvorrichtung, Bedienfeldrechner
- 16: Datenverbindung
- 18: Maschinensteuerung

- 20: Sensor
- 22: Werkzeugaufnahme
- 24: Fräser
- 26: Datenbus
- 28: Auswerteeinheit

- 30: Schnittstelle
- 32: erste Schnittstelle
- 34: zweite Schnittstelle
- 36: Spindel

- A: Abarbeitungsgeschwindigkeitswert (=Override-Wert)
- a: Verstärkungsfaktor
- i: Laufindex (Nummer der Werkzeugmaschine)
- j: Laufindex (Nummer des Zeitpunkts)
- M: Messdaten
- M_{A}: Antriebs-Drehmoment
- M_{S}: Schwellenwert
- N: Zahl der Werkzeugmaschinen
- t_{M}: Maschinenzeit
- tₐ: absolute Zeit

- *τ*: Reaktionszeit

## Patentansprüche

1. Verfahren zum Überwachen von zumindest einer Werkzeugmaschine (12), mit den Schritten:
(a) in Echtzeit Erfassen von zeitabhängigen Messdaten (Mᵢ), die einen auf der Werkzeugmaschine (12) ablaufenden Fertigungsprozess charakterisieren,
(b) Versehen der Messdaten (Mᵢ) mit einem Zeitstempel, der einen Zeitpunkt (tⱼ) kodiert, zu dem ein jeweiliges Messdatum (Mᵢ) erfasst wurde, sodass Messergebnisse (Mᵢ(tⱼ)) erhalten werden,
(c) Übertragen der Messergebnisse (Mᵢ(tⱼ)) über einen nicht echtzeitfähigen Datenbus (26) an eine Auswerteeinheit (28),
(d) aus den Messergebnissen Berechnen zumindest eines Befehls (B) mittels der Auswerteeinheit,
(e) Übertragen des zumindest einen Befehls (B) über den Datenbus (26),
(f) Überwachen des Fertigungsprozesses in Echtzeit mittels eines Programms, das den Befehl (B) enthält, **gekennzeichnet durch** die nachfolgenden Schritte
(g) Ermitteln einer Reaktionszeit des Datenbusses (26) mittels einer Werkzeugmaschinen-Überwachungsvorrichtung (14) und
(h) wenn die Reaktionszeit (τ) einen vorgegebenen Reaktionszeit-Schwellenwert (τ_{S}) überschreitet, Begrenzen eines Abarbeitungsgeschwindigkeitswerts (A), der eine Geschwindigkeit kodiert, mit der ein Fertigungsprogramm auf der Werkzeugmaschine (12) abgearbeitet wird, auf einen Maximal- Abarbeitungsgeschwindigkeitswert (Aₘₐₓ).

2. Verfahren nach Anspruch 1, **dadurch gekennzeichnet, dass** das Programm, das den übertragenen Befehl enthält, zum Überwachen desjenigen Fertigungsprozesses verwendet wird, während dem die Messdaten erfasst wurden, aus denen der Befehl (B) berechnet wurde.

3. Verfahren nach einem der vorstehenden Ansprüche, **dadurch gekennzeichnet, dass** eine Antwortzeit zwischen dem Übertragen der Messergebnisse an die Auswerteeinheit und einem Empfangen des über den Datenbus (26) übertragenen Befehls (B) höchstens 1 Sekunde beträgt.

4. Verfahren nach einem der vorstehenden Ansprüche, **dadurch gekennzeichnet, dass** eine Verarbeitungszeit zwischen dem Erfassen eines Messdatums (Mᵢ₀) und dem Empfangen des über den Datenbus (26) übertragenen Befehls (B), der unter Verwendung des Messdatums (Mᵢ₀) berechnet wurde, höchstens 60 Sekunden, insbesondere höchstens 10 Sekunden, beträgt.

5. Verfahren nach einem der vorstehenden Ansprüche, **dadurch gekennzeichnet, dass** der Befehl ein Bedingungs-Befehl (B) ist und der Befehl (B) kodiert, wann und/oder wie stark ein Abarbeitungsgeschwindigkeitswert (A) zu ändern ist, wobei der Abarbeitungsgeschwindigkeitswert (A) eine Geschwindigkeit kodiert, mit der ein Fertigungsprogramm auf der Werkzeugmaschine (12) abgearbeitet wird und der Befehl zumindest einen Parameter (a) kodiert, der eine Abhängigkeit einer Änderung des Abarbeitungsgeschwindigkeitswerts (A) von einem Maschinenparameter, insbesondere einem Antriebs-Drehmoment (M_{A}), beschreibt.

6. Verfahren nach einem der vorstehenden Ansprüche, **dadurch gekennzeichnet, dass** der Befehl ein Bedingungs-Befehl (B) ist und kodiert, dass der Fertigungsprozess stoppt, wenn ein Prozessparameter, der eine Prozesskraft beschreibt, einen im Befehl kodierten Prozessparameter-Maximalwert überschreitet.

7. Verfahren nach einem der vorstehenden Ansprüche, **dadurch gekennzeichnet, dass** der Befehl ein Bedingungs-Befehl (B) ist und kodiert, dass der Fertigungsprozess stoppt, wenn ein Spindelparameter, der ein Spindeldrehmoment einer Spindel der Werkzeugmaschine (12) beschreibt, einen im Befehl kodierten Maximalwert überschreitet.

8. Verfahren nach Anspruch 7, **dadurch gekennzeichnet, dass** der Befehl ein Bedingungs-Befehl (B) ist und kodiert, dass der Fertigungsprozess stoppt, wenn der Spindelparameter einen im Befehl kodierten Minimalwert für eine vorgegebene Zeitspanne unterschreitet.

9. Verfahren nach einem der vorstehenden Ansprüche, **dadurch gekennzeichnet, dass**
- zumindest zwei, insbesondere zumindest vier, Werkzeugmaschinen-Überwachungsvorrichtungen (14.1, 14.2) mit der Auswerteeinheit (28) über den Datenbus (26) verbunden sind,
- jede Werkzeugmaschinen-Überwachungsvorrichtung (14.1, 14.2) zeitabhängige Messdaten (Mi) von jeweils einer Werkzeugmaschine (12) erfasst und
- die Auswerteeinheit (28) aus den jeweiligen Messergebnissen (Mᵢ(tⱼ)) für alle Werkzeugmaschinen-Überwachungsvorrichtungen (14.1, 14.2) Befehle berechnet.

10. Fertigungsanlage (10) mit
(i) einer ersten Werkzeugmaschine (12.1), die eine erste echtzeitfähige Maschinensteuerung (18.1) aufweist,
(ii) zumindest einer zweiten Werkzeugmaschine (12.2), die eine zweite echtzeitfähige Maschinensteuerung (18.2) aufweist, und
(iii) einer Auswerteeinheit (28),
(iv) einem nicht echtzeitfähigen Datenbus (26), der die erste Werkzeugmaschine (12.1) und die zumindest eine zweite Werkzeugmaschine (12.2) mit der Auswerteeinheit (28) verbindet,
(v) wobei die Werkzeugmaschinen (12.1, 12.2) eingerichtet sind zum automatischen
(a) Erfassen von zeitabhängigen Messdaten (M), die einen auf der jeweiligen Werkzeugmaschine (12) ablaufenden Fertigungsprozess charakterisieren,
(b) Versehen der Messdaten (Mi) mit einem Zeitstempel, der einen Zeitpunkt (tⱼ) kodiert, zu dem ein jeweiliges Messdatum erfasst wurde, sodass Messergebnisse (Mᵢ(tⱼ)) erhalten werden, und
(c) Senden der Messergebnisse (Mᵢ(tⱼ)) über den Datenbus (26) an die Auswerteeinheit (28),
(vi) wobei die Auswerteeinheit (28) eingerichtet ist zum automatischen
(a) Berechnen zumindest eines Befehls (B) für die Werkzeugmaschinen aus den jeweiligen Messergebnissen (Mᵢ(tⱼ)) und
(b) Senden des zumindest einen Befehls (B) über den Datenbus (26) an die Werkzeugmaschinen (12.1, 12.2) und
(vii) wobei die Werkzeugmaschinen (12.1, 12.2) eingerichtet sind zum automatischen
(a) Empfangen des zumindest einen Befehls (B) von der Auswerteeinheit (28),
(b) Überwachen des Fertigungsprozesses mittels eines Programms, das den Befehl (B) enthält
**dadurch gekennzeichnet, dass**
(viii) die Werkzeugmaschinen (12.1, 12.2) eingerichtet sind zum automatischen
(c) Ermitteln einer Reaktionszeit (τ) des Datenbusses (26) und
(d) wenn die Reaktionszeit (τ) einen vorgegebenen Reaktionszeit-Schwellenwert (τ_{S}) überschreitet, Begrenzen eines Abarbeitungsgeschwindigkeitswerts (A), der eine Geschwindigkeit kodiert, mit der ein Fertigungsprogramm auf der Werkzeugmaschine (12) abgearbeitet wird, auf einen Maximal- Abarbeitungsgeschwindigkeitswert (Aₘₐₓ).

11. Fertigungsanlage (10) nach Anspruch 10, **gekennzeichnet durch**
(i) eine erste, nicht echtzeitfähige Werkzeugmaschinen-Überwachungsvorrichtung (14.1), die mit der ersten Maschinensteuerung (18.1) verbunden ist, insbesondere einen ersten Bedienfeldrechner,
(ii) eine zweite nicht echtzeitfähige Werkzeugmaschinen-Überwachungsvorrichtung (14.2), die mit der zweiten Maschinensteuerung (18.2) verbunden ist, insbesondere einen zweiten Bedienfeldrechner,
(iii) wobei die erste Werkzeugmaschinen-Überwachungsvorrichtung (14.1) eingerichtet ist zum automatischen
(a) Erfassen von Messergebnissen aus Messdaten und Zeitstempeln von der ersten Maschinensteuerung,
(b) Senden der Messergebnisse an die Auswerteeinheit,
(c) Empfangen des zumindest einen Befehls von der Auswerteeinheit und
(d) Übertragen des zumindest einen Befehls an die Maschinensteuerung (18).

12. Fertigungsanlage (10) nach Anspruch 10 oder 11, **dadurch gekennzeichnet, dass**
(i) die erste Maschinensteuerung (18.1) eingerichtet ist zum automatischen
(a) Erfassen von Messergebnissen aus Messdaten und Zeitstempeln,
(b) Senden der Messergebnisse an die Auswerteeinheit,
(c) Empfangen des zumindest einen Befehls von der Auswerteeinheit und
(d) Überwachen des Fertigungsprozesses der ersten Werkzeugmaschine (12.1) mittels eines Programms, das den Befehl umsetzt und/oder
(ii) die erste Maschinensteuerung (18.1) eingerichtet ist zum automatischen
(a) Erfassen von Messergebnissen aus Messdaten und Zeitstempeln,
(b) Senden der Messergebnisse an die Auswerteeinheit,
(c) Empfangen des zumindest einen zweiten Befehls von der Auswerteeinheit und
(d) Überwachen des Fertigungsprozesses der zweiten Werkzeugmaschine (12.2) mittels eines Programms, das den zweiten Befehl umsetzt.

13. Werkzeugmaschinen-Überwachungsvorrichtung (14) mit
(a) einer ersten Schnittstelle (32) zum Verbinden mit einer echtzeitfähigen Maschinensteuerung (18) einer Werkzeugmaschine (12),
(b) einer zweiten Schnittstelle (34) für einen nicht echtzeitfähigen Datenbus (26) zum Verbinden mit einer Auswerteeinheit (28),
(c) wobei die Werkzeugmaschinen-Überwachungsvorrichtung (14) eingerichtet ist zum automatischen Durchführen eines Verfahrens mit den Schritten:
(i) Erfassen von zeitabhängigen Messdaten (M), die einen auf der jeweiligen Werkzeugmaschine (12) ablaufenden Fertigungsprozess charakterisieren, von der Maschinensteuerung (18),
(ii) Versehen der Messdaten (Mi) mit einem Zeitstempel, der einen Zeitpunkt (tⱼ) kodiert, zu dem ein jeweiliges Messdatum erfasst wurde, sodass Messergebnisse (Mᵢ(tⱼ)) erhalten werden, und
(iii) Senden der Messergebnisse (Mᵢ(tⱼ)) über den Datenbus (26) an die Auswerteeinheit (28),
(iv) Empfangen des zumindest einen Befehls (B) über den Datenbus (26) von der Auswerteeinheit (28) und
(v) Überwachen des Fertigungsprozesses mittels eines Programms, das den Befehl (B) enthält,
**gekennzeichnet durch** die nachfolgenden Schritte
(vi) Ermitteln einer Reaktionszeit (τ) des Datenbusses (26) und
(vii) wenn die Reaktionszeit (τ) einen vorgegebenen Reaktionszeit-Schwellenwert (τ_{S}) überschreitet,
Begrenzen eines Abarbeitungsgeschwindigkeitswerts (A), der eine Geschwindigkeit kodiert, mit der ein Fertigungsprogramm auf der Werkzeugmaschine (12) abgearbeitet wird, auf einen Maximal- Abarbeitungsgeschwindigkeitswert (Aₘₐₓ).

## Claims

1. A method for monitoring at least one machine tool (12), featuring the steps:
(a) real-time detection of time-dependent measurement data (Mᵢ) characterising a production process running on the machine tool (12),
(b) provision of the measurement data (Mᵢ) with a time stamp which encodes a time (tⱼ) at which a respective measurement data (Mᵢ) was detected, such that measurement results (Mᵢ(tⱼ)) are obtained,
(c) transmission of the measurement results (Mᵢ(tⱼ)) by a non-real-time-capable data bus (26) to an evaluation unit (28),
(d) calculation of at least one command (B) from the measurement results by means of the evaluation unit,
(e) transmission of the at least one command (B) via the data bus (26),
(f) monitoring of the production process in real-time by means of a programme that contains the command (B),
**characterized by** the subsequent steps
(g) determination of a reaction time of the data bus (26) by means of a machine tool monitoring device (14) and
(h) if the reaction time (τ) exceeds a pre-set reaction time threshold value (τ_{S}), limitation of a processing speed value (A) that encodes a speed at which a production programme is executed on the machine tool (12) to a maximum processing speed value (Aₘₐₓ).

2. The method according to claim 1, **characterised in that** the programme that contains the transmitted command is used for monitoring the production process during which the measurement data was detected from which the command (B) was calculated.

3. The method according to one of the preceding claims, **characterised in that** a maximum response time between the transmission of the measurement results to the evaluation unit and a receipt of the command (B) transmitted via the data bus (26) is preferably 1 second.

4. The method according to one of the preceding claims, **characterised in that** a processing time between the detection of a measurement data (Mᵢ₀) and the receipt of the command (B) transmitted via the data bus (26), wherein this command was calculated using the measurement data (Mᵢ₀), is a maximum of 60 seconds, in particular a maximum of 10 seconds.

5. The method according to one of the preceding claims, **characterised in that** the command is a condition command (B) and the command (B) encodes when/to what extent a processing speed value (A) is to be adjusted, wherein the processing speed value (A) encodes a speed at which a production programme is executed on the machine tool (12) and the command encodes at least one parameter (a) which describes a dependency of one adjustment of the processing speed value (A) of a machine parameter, in particular a drive torque (M_{A}).

6. The method according to one of the preceding claims, **characterised in that** the command is a condition command (B) and encodes that the production process stops if a process parameter, which describes a process force, exceeds a process parameter maximum value encoded in the command.

7. The method according to one of the preceding claims, **characterised in that** the command is a condition command (B) and encodes that the production process stops if a spindle parameter, which describes a spindle torque of a spindle of the machine tool (12), exceeds a maximum value encoded in the command.

8. The method according to claim 7, **characterised in that** the command is a condition command (B) and encodes that the production process stops if the spindle parameter does not reach a minimum value encoded in the command for a predetermined period.

9. The method according to one of the preceding claims, **characterised in that**
- at least two, especially at least four, machine tool monitoring devices (14.1, 14.2) are connected to the evaluation unit (28) via the data bus (26),
- each machine tool monitoring device (14.1, 14.2) detects time-dependent measurement data (Mᵢ) of a machine tool (12) and
- the evaluation unit (28) calculates commands for all machine tool monitoring devices (14.1, 14.2) from the respective measurement results (Mᵢ(tⱼ)).

10. A production system (10) with
(i) a first machine tool (12.1)
which comprises a first real-time-capable machine controller (18.1),
(ii) at least a second machine tool (12.2)
which comprises a second real-time-capable machine controller (18.2), and
(iii) an evaluation unit (28),
(iv) a non-real-time-capable data bus (26) which connects the first machine tool (12.1) and the at least one second machine tool (12.2) to the evaluation unit (28),
(v) wherein the machine tools (12.1, 12.2) are configured to automatically
(a) detect time-dependent measurement data (M) characterising a production process running on the machine tool (12),
(b) provide the measurement data (Mᵢ) with a time stamp which encodes a time (tⱼ) at which a respective measurement data was detected, such that measurement results (Mᵢ(tⱼ)) are obtained, and
(c) transmit the measurement results (Mᵢ(tⱼ)) via the data bus (26) to the evaluation unit (28),
(vi) wherein the evaluation unit (28) is set up to automatically
(a) calculate at least one command (B) for the machine tools from the respective measurement results (Mᵢ(tⱼ)) and
(b) transmit the at least one command (B) via the data bus (26) to the machine tools (12.1, 12.2) and
(vii) wherein the machine tools (12.1, 12.2) are configured to automatically
(a) receive the at least one command (B) from the evaluation unit (28),
(b) monitor the production process by means of a programme that contains the command (B)
**characterised in that**
(viii) the machine tools (12.1, 12.2) are configured to automatically
(c) determine a reaction time (τ) of the data bus (26) and
(d) if the reaction time (τ) exceeds a pre-set reaction time threshold value (τ_{S}), limit a processing speed value (A) to a maximum processing speed value (Aₘₐₓ).

11. The production device (10) according to claim 10, **characterised by**
(i) a first non-real-time-capable machine tool monitoring device (14.1) that is connected to the first machine controller (18.1), in particular a first operating panel computer,
(ii) a second non-real-time-capable machine tool monitoring device (14.2) that is connected to the second machine controller (18.2), in particular a second operating panel computer,
(iii) wherein the machine tool monitoring device (14.1) is set up to automatically
(a) detect measurement results from measurement data and time stamps from the first machine controller,
(b) transmit the measurement results to the evaluation unit,
(c) receive the at least one command from the evaluation unit, and
(d) transmit the at least one command to the machine controller (18).

12. The production system (10) according to claim 10 or 11, **characterised in that**
(i) the first machine controller (18.1) is configured to automatically
(a) identify measurement results from measurement data and time stamps
(b) transmit the measurement results to the evaluation unit,
(c) receive the at least one command from the evaluation unit, and
(d) monitor the production process of the first machine tool (12.1) by means of a programme which executes the command and/or
(ii) the first machine controller (18.1) is configured to automatically
(a) identify measurement results from measurement data and time stamps
(b) transmit the measurement results to the evaluation unit,
(c) receive the at least one second command from the evaluation unit, and
(d) monitor the production process of the second machine tool (12.2) by means of a programme which executes the second command.

13. A machine tool monitoring device (14) with
(a) a first interface (32) for connecting to a real-time-capable machine controller (18) of a machine tool (12),
(b) a second interface (34) for a non-real-time-capable data bus (26) for connecting to an evaluation unit (28),
(c) wherein the machine tool monitoring device (14) is configured to automatically execute a method featuring the steps:
(i) detection of time-dependent measurement data (M) from the machine controller (18), the measurement data characterising a production process running on the machine tool (12),
(ii) provision of the measurement data (Mᵢ) with a time stamp which encodes a time (tⱼ) at which a respective measurement data was detected, such that measurement results (Mᵢ(tⱼ)) are obtained, and
(iii) transmission of the measurement results (Mᵢ(tⱼ)) via the data bus (26) to the evaluation unit (28),
(iv) receipt of the at least one command (B) from the evaluation unit (28) via the data bus, and
(v) monitoring of the production process by means of a programme that contains the command (B),
**characterized by** the following steps:
(vi) determination a reaction time (τ) of the data bus (26) and
(vii) if the reaction time (τ) exceeds a pre-set reaction threshold value (τ_{S}), limitation of a processing speed value (A), which encodes a speed at which a production programme is processed on the machine tool (12), to a maximum processing speed value (Aₘₐₓ).

## Revendications

1. Procédé de surveillance d'au moins une machine-outil (12), comprenant les étapes consistant à :
(a) acquérir en temps réel des données de mesure (Mᵢ) dépendant du temps, qui caractérisent un processus de fabrication se déroulant sur la machine-outil (12),
(b) pourvoir les données de mesure (Mᵢ) d'un horodatage codant un instant (tⱼ) auquel une donnée de mesure respective (Mᵢ) a été acquise, de manière à obtenir des résultats de mesure (Mᵢ(tⱼ)),
(c) transmettre les résultats de mesure (Mᵢ(tⱼ)) à une unité d'évaluation (28) via un bus de données (26) non capable de fonctionner en temps réel,
(d) calculer au moins une instruction (B) à partir des résultats de mesure au moyen de l'unité d'évaluation,
(e) transmettre ladite au moins une instruction (B) via le bus de données (26),
(f) surveiller le processus de fabrication en temps réel au moyen d'un programme contenant l'instruction (B),
**caractérisé par** les étapes suivantes consistant à :
(g) déterminer un temps de réponse du bus de données (26) au moyen d'un dispositif de surveillance de machine-outil (14) ; et
(h) si le temps de réponse (τ) dépasse un seuil de temps de réponse prédéterminé (τ_{S}), limiter une valeur de vitesse d'exécution (A), codant une vitesse à laquelle un programme de fabrication est exécuté sur la machine-outil (12), à une valeur de vitesse d'exécution maximale (Aₘₐₓ).

2. Procédé selon la revendication 1, **caractérisé en ce que** le programme contenant l'instruction transmise est utilisé pour surveiller le processus de fabrication au cours duquel ont été acquises les données de mesure à partir desquelles l'instruction (B) a été calculée.

3. Procédé selon l'une des revendications précédentes, **caractérisé en ce qu'**un temps de réponse entre la transmission des résultats de mesure à l'unité d'évaluation et une réception de l'instruction (B) transmise par le bus de données (26) est au maximum de 1 seconde.

4. Procédé selon l'une des revendications précédentes, **caractérisé en ce qu'**un temps d'exécution entre l'acquisition d'une donnée de mesure (Mᵢ₀) et la réception de l'instruction (B), transmise par le bus de données (26) et calculée à partir de la donnée de mesure (Mᵢ₀), est au maximum de 60 secondes, en particulier au maximum de 10 secondes.

5. Procédé selon l'une des revendications précédentes, **caractérisé en ce que** l'instruction est une instruction conditionnelle (B) et l'instruction (B) code quand et/ou de combien une valeur de vitesse d'exécution (A) doit être modifiée, la valeur de vitesse d'exécution (A) codant une vitesse à laquelle un programme de fabrication est exécuté sur la machine-outil (12), et l'instruction codant au moins un paramètre (a) qui décrit une dépendance d'une modification de la valeur de vitesse d'exécution (A) par rapport à un paramètre de la machine, en particulier par rapport à un couple d'entraînement (M_{A}).

6. Procédé selon l'une des revendications précédentes, **caractérisé en ce que** l'instruction est une instruction conditionnelle (B) et code que le processus de fabrication s'arrête lorsqu'un paramètre de processus décrivant une force de processus dépasse une valeur maximale de paramètre de processus codée dans l'instruction.

7. Procédé selon l'une des revendications précédentes, **caractérisé en ce que** l'instruction est une instruction conditionnelle (B) et code que le processus de fabrication s'arrête lorsqu'un paramètre de broche décrivant un couple de rotation de broche d'une broche de la machine-outil (12) dépasse une valeur maximale codée dans l'instruction.

8. Procédé selon la revendication 7, **caractérisé en ce que** l'instruction est une instruction conditionnelle (B) et code que le processus de fabrication s'arrête lorsque le paramètre de broche tombe en dessous d'une valeur minimale, codée dans l'instruction, pendant une période de temps prédéterminée.

9. Procédé selon l'une des revendications précédentes, **caractérisé en ce que**
- au moins deux, en particulier au moins quatre, dispositifs de surveillance de machine-outil (14.1, 14.2) sont connectés à l'unité d'évaluation (28) via le bus de données (26),
- chaque dispositif de surveillance de machine-outil (14.1, 14.2) acquiert des données de mesure (Mᵢ) dépendant du temps et provenant d'une machine-outil respective (12), et
- l'unité d'évaluation (28) calcule des instructions à partir des résultats de mesure respectifs (Mᵢ(tⱼ)) pour tous les dispositifs de surveillance de machine-outil (14.1, 14.2).

10. Installation de fabrication (10), comportant
(i) une première machine-outil (12.1),
qui possède une première commande de machine (18.1) capable de fonctionner en temps réel,
(ii) au moins une deuxième machine-outil (12.2),
qui possède une deuxième commande de machine (18.2) capable fonctionner en temps réel, et
(iii) une unité d'évaluation (28),
(iv) un bus de données (26) non capable de fonctionner en temps réel qui connecte la première machine-outil (12.1) et ladite au moins une deuxième machine-outil (12.2) à l'unité d'évaluation (28),
(v) les machines-outils (12.1, 12.2) étant conçues pour automatiquement
(a) acquérir des données de mesure (Mᵢ) dépendant du temps, qui caractérisent un processus de fabrication se déroulant sur la machine-outil (12) respective,
(b) pourvoir les données de mesure (Mᵢ) d'un horodatage codant un instant (tⱼ) auquel une donnée de mesure respective a été acquise, de manière à obtenir des résultats de mesure (Mᵢ(tⱼ)), et
(c) envoyer les résultats de mesure (Mᵢ(tⱼ)) à l'unité d'évaluation (28) via le bus de données (26),
(vi) l'unité d'évaluation (28) étant conçue pour automatiquement
(a) calculer au moins une instruction (B) pour les machines-outils à partir des résultats de mesure (Mᵢ(tⱼ)) respectifs, et
(b) envoyer ladite au moins une instruction (B) aux machines-outils (12.1, 12.2) via le bus de données (26),
(vii) les machines-outils (12.1, 12.2) étant conçues pour automatiquement
(a) recevoir ladite au moins une instruction (B) provenant de l'unité d'évaluation (28),
(b) surveiller le processus de fabrication au moyen d'un programme contenant l'instruction (B),
**caractérisée en ce que**
(viii) les machines-outils (12.1, 12.2) sont conçues pour automatiquement
(c) déterminer un temps de réponse (τ) du bus de données (26), et
(d) si le temps de réponse (τ) dépasse un seuil de temps de réponse prédéterminé (τ_{S}), limiter une valeur de vitesse d'exécution (A), codant une vitesse à laquelle un programme de fabrication est exécuté sur la machine-outil (12), à une valeur de vitesse d'exécution maximale (Amax).

11. Installation de fabrication (10) selon la revendication 10, **caractérisée par**
(i) un premier dispositif de surveillance de machine-outil (14.1) non capable de fonctionner en temps réel et connecté à la première commande de machine (18.1), en particulier à un premier ordinateur de panneau d'opérateur,
(ii) un deuxième dispositif de surveillance de machine-outil (14.2) non capable de fonctionner en temps réel et connecté à la deuxième commande de machine (18.1), en particulier à un deuxième ordinateur de panneau d'opérateur,
(iii) le premier dispositif de surveillance de machine-outil (14.1) étant conçu pour automatiquement
(a) acquérir des résultats de mesure à partir de données de mesure et d'horodatages provenant de la première commande de machine,
(b) envoyer les résultats de mesure à l'unité d'évaluation,
(c) recevoir ladite au moins une instruction provenant de l'unité d'évaluation, et
(d) transmettre ladite au moins une instruction à la commande de machine (18).

12. Installation de fabrication (10) selon la revendication 10 ou 11, **caractérisée en ce que**
(i) la première commande de machine (18.1) est conçue pour automatiquement
(a) acquérir des résultats de mesure à partir de données de mesure et d'horodatages,
(b) envoyer les résultats de mesure à l'unité d'évaluation,
(c) recevoir ladite au moins une instruction provenant de l'unité d'évaluation, et
(d) surveiller le processus de fabrication de la première machine-outil (12.1) au moyen d'un programme qui met en œuvre l'instruction et/ou
(ii) la première commande de machine (18.1) est conçue pour automatiquement
(a) acquérir des résultats de mesure à partir de données de mesure et d'horodatages,
(b) envoyer les résultats de mesure à l'unité d'évaluation,
(c) recevoir ladite au moins une deuxième instruction provenant de l'unité d'évaluation, et
(d) surveiller le processus de fabrication de la deuxième machine-outil (12.2) au moyen d'un programme qui met en œuvre la deuxième instruction.

13. Dispositif de surveillance de machine-outil (14), comprenant
(a) une première interface (32) pour la connexion avec une commande de machine (18), capable de fonctionner en temps réel, d'une machine-outil (12),
(b) une deuxième interface (34) pour un bus de données (26), non capable de fonctionner en temps réel, pour la connexion avec une unité d'évaluation (23),
(c) le dispositif de surveillance de machine-outil (14) étant conçu pour automatiquement mettre en œuvre un procédé comprenant les étapes consistant à :
(i) acquérir des données de mesure (M) dépendant du temps, qui caractérisent un processus de fabrication se déroulant sur la machine-outil (12) respective, depuis la commande de machine (18),
(ii) pourvoir les données de mesure (Mi) d'un horodatage codant un instant (tⱼ) auquel une donnée de mesure respective a été acquise, de manière à obtenir des résultats de mesure (Mi(tj)), et
(iii) envoyer les résultats de mesure (Mᵢ(tⱼ)) à l'unité d'évaluation (28) via le bus de données (26),
(iv) recevoir ladite au moins une instruction (B) provenant de l'unité d'évaluation (28) via le bus de données (26), et
(v) surveiller le processus de fabrication au moyen d'un programme contenant l'instruction (B),
**caractérisé par** les étapes suivantes consistant à :
(vi) déterminer un temps de réponse (τ) du bus de données (26), et
(vii) si le temps de réponse (τ) dépasse un seuil de temps de réponse prédéterminé (τ_{S}), limiter une valeur de vitesse d'exécution (A), codant une vitesse à laquelle un programme de fabrication est exécuté sur la machine-outil (12), à une valeur de vitesse d'exécution maximale (Aₘₐₓ).
